# EUROPEAN PATENT SPECIFICATION

(11) **EP 3 708 706 B1**
(45) Date of publication and mention of the grant of the patent: **10.04.2024**
(21) Application number: 18898608.7
(22) Date of filing: 28.12.2018
(51) Int. Cl.: D06F 39/02, D06F 31/00, D06F 33/37

(54) **WASHING MACHINE**
WASCHMASCHINE
LAVE-LINGE

(30) Priority: 03.01.2018 KR 20180000942
(43) Date of publication of application: 16.09.2020
(73) Proprietor: Samsung Electronics Co., Ltd., Gyeonggi-do 16677 (KR)
(72) Inventor: SEO, Dongpil, Suwon-si Gyeonggi-do 16677 (KR); JIN, Yongjie, Suwon-si Gyeonggi-do 16677 (KR); LEE, Sangup, Suwon-si Gyeonggi-do 16677 (KR); LEE, Changwoo, Suwon-si Gyeonggi-do 16677 (KR); CHO, Kyuhyun, Suwon-si Gyeonggi-do 16677 (KR)
(74) Representative: Walaski, Jan Filip
(86) International application number: PCT/KR2018/016805
(87) International publication number: WO 2019/135554

(56) References cited:
- EP-A1- 2 065 503
- EP-A1- 3 115 498
- WO-A1-02/12609
- WO-A1-2017/107359
- CN-A- 106 906 615
- KR-A- 20150 072 169
- KR-B1- 100 624 367
- US-A1- 2013 098 450

## Description

### [TECHNICAL FIELD]

The disclosure relates to a washing machine having a plurality of washing tubs in which laundry is placed and performing a washing process, and more particularly to a washing machine with a structure to supply water, detergent and softener into a washing tub.

### [BACKGROUND ART]

A washing machine refers to an apparatus that includes a washing tub in which laundry such as cloth, clothes, bedclothes, etc. is placed, and a motor which drives the washing tub to spin to thereby do the laundry in the washing tub. The washing machine may be classified into two of a front-loading washing machine and a top-loading washing machine according to dispositions of the washing tub. In the front-loading washing machine, a horizontal shaft is connected to the washing tub which is disposed in a substantially horizontal direction. As the washing tub of the front-loading washing machine spins forward and backward with respect to the horizontal shaft, the laundry is lifted up along the inner circumferential surface of the washing tub and then falls, so that the laundry can get clean based on a shock caused by the fall. In the top-loading washing machine, a vertical shaft is connected to the washing tub which is disposed in a substantially vertical direction, and a pulsator is provided inside the washing tub. As the washing tub of the top-loading washing machine spins forward and backward with respect to the vertical shaft, the laundry gets clean based on water flow generated by the pulsator.

Further, the washing machine has a structure for supplying hot water and cold water needed for a wash into the washing tub, and a structure for supplying detergent and softener into the washing tub. In particular, a container in which the detergent and the softener are stored is provided in an upper portion of the washing machine, so that the detergent or the softener in the container can be delivered to a water supplying channel. Thus, the detergent or the softener from the container is mixed with water supplied through the channel, and supplied to the washing tub.

A conventional washing machine pumps up the detergent and the softener, which are individually and separately stored in the container, as much as necessary by a pump according to processes, and puts the pumped detergent or softener together with water into the washing tub.

Meanwhile, there is a washing machine which is designed to include two washing tubs. Such a washing machine has a structure for individually driving the two washing tubs, and simultaneously performs the individual washing processes.

However, in such a conventional washing machine, the two washing tubs are respectively accommodated in different housings, and the two separable housings are stacked and coupled. A water supply pipes for supplying hot water and cold water to the washing tub, and a drain pipe for draining water out of the washing tub are separately provided corresponding to each individual washing tub. In such a conventional washing machine, the structure for supplying the detergent and the softener is provided in only one of the two washing tubs. For example, when the conventional washing machine includes a first housing accommodating the first washing tub, and a second housing stacked on the first housing and accommodating the second washing tub, the foregoing structure for supplying the detergent and the softener is provided in only the upper second housing. In this case, a user needs to manually put the detergent or the softener into the first washing tub.

Accordingly, the washing machine including the two washing tubs is required to have a structure for supplying the detergent and the softener to both the washing tubs, and thus a user does not need to manually put the detergent or the softener into one of the washing tubs.

WO2017/107359A1 relates to a multiple laundry machine having a first washing tub, a second washing tub, and an automatic dispensing system comprising a detergent storage box, a reversing valve, a dispensing pump, and a three-way valve to dispense detergent to the tubs.

### [TECHNICAL SOLUTION]

In accordance with the present invention, there is provided a washing machine according to claim 1. Optional features are set out in the dependent claims.

The washing machine may further include a water supplying unit configured to supply water to the plurality of washing tubs, and coupled to the channel housing discharger so that the detergent discharged from the channel housing discharger can be mixed with the supplied water.

Here, the container may include a first container configured to store the detergent, and a second container configured to store the softener; the channel housing may further include a softener channel extended from the second container and branching off respectively corresponding to the plurality of washing tubs; and each channel branched from the softener channel may communicate with the plurality of channel housing dischargers with which each channel branched from the detergent channel communicates.

Here, the channel housing discharger may include a discharging pipe coupled to the water supplying unit, and the discharging pipe may include a first pipe communicating with one of the detergent channel and the softener channel, and a second pipe surrounding an outer circumference of the first pipe so as to be isolated from the first pipe and communicating with the other one of the detergent channel and the softener channel.

Here, the channel housing discharger may include: a valve provided in an outlet of at least one of the first pipe or the second pipe in the discharging pipe; and a spring configured to bias the valve to selectively close or open the outlet based on the pumping operation of the pump.

Further, the detergent channel may include a first detergent channel through which detergent moves to be supplied to a first washing tub among the plurality of washing tubs, and a second detergent channel through which detergent moves to be supplied to a second washing tub among the plurality of washing tubs, and the controller may control at least one pump to move the detergent through one selected between the first detergent channel and the second detergent channel based on a washing process.

Further, the channel housing may include: at least one backflow detergent discharging hole formed to penetrate the channel housing from an upper plate of the channel housing so as to discharge the detergent, which flows back toward the upper plate of the channel housing, to the plurality of washing tubs; and a rib standing on the upper plate and surrounding a certain area of the upper plate including the at least one backflow detergent discharging hole.

Further, the water supplying unit may include: a water-supplying-unit housing formed with a water-supply channel through which water moves; a discharging hole through which water moving in the water-supply channel is discharged to the washing tub; and a detergent supplier provided on the water-supply channel and configured to supply the detergent discharged from the channel housing discharger to the discharging hole as mixed with the water.

Here, the water-supply channel may be extended from a first position, at which cold water is supplied to the water-supplying-unit housing, to the discharging hole via a second position at which hot water is supplied to the water-supplying-unit housing.

Here, the detergent supplier may be correspondingly provided between the second position of the water-supply channel and the discharging hole.

Further, the channel housing is formed as a single body by injection molding.

### [DESCRIPTION OF DRAWINGS]

FIG. 1 is a perspective view showing an outer appearance of a washing machine according to an embodiment of the disclosure.
FIG. 2 is a block diagram showing a control structure of a washing machine according to an embodiment of the disclosure.
FIG. 3 is a partial perspective view showing a detergent supplying unit of a washing machine according to an embodiment of the disclosure.
FIG. 4 is a partial plan view showing an inside of a lower plate of a detergent channel housing applied to a washing machine according to an embodiment of the disclosure.
FIG. 5 is a partial plane view showing an enlarged area A of FIG. 4.
FIG. 6 is a partial cross-sectional view showing a structure of a second discharger coupled to a water supplying unit in a washing machine according to an embodiment of the disclosure.
FIG. 7 is a partial plan view showing an upper plate of a detergent channel housing applied to a washing machine according to an embodiment of the disclosure.
FIG. 8 is a plan view showing a path through which water is supplied to a first washing tub in a water supplying unit of a washing machine according to an embodiment of the disclosure.
FIG. 9 is a plan view showing a path through which water is supplied to a second washing tub in a water supplying unit of a washing machine according to an embodiment of the disclosure.
FIG. 10 illustrates a schematic structure of channels in a water supplying unit of a washing machine according to an embodiment of the disclosure.

### [BEST MODE]

Below, embodiments will be described in detail with reference to accompanying drawings. Further, the embodiments described with reference to the accompanying drawings are not exclusive to each other unless otherwise mentioned, and a plurality of embodiments may be selectively combined within one apparatus. The combination of these plural embodiments may be discretionally selected and applied to realize the present inventive concept by a person having an ordinary skill in the art.

In the description of the embodiments, an ordinal number used in terms such as a first element, a second element, etc. is employed for describing variety of elements, and the terms are used for distinguishing between one element and another element. Therefore, the meanings of the elements are not limited by the terms, and the terms are also used just for explaining the corresponding embodiment without limiting the disclosure.

Further, a term "at least one" among a plurality of elements in the disclosure represents not only all the elements but also each one of the elements, which excludes the other elements or all combinations of the elements.

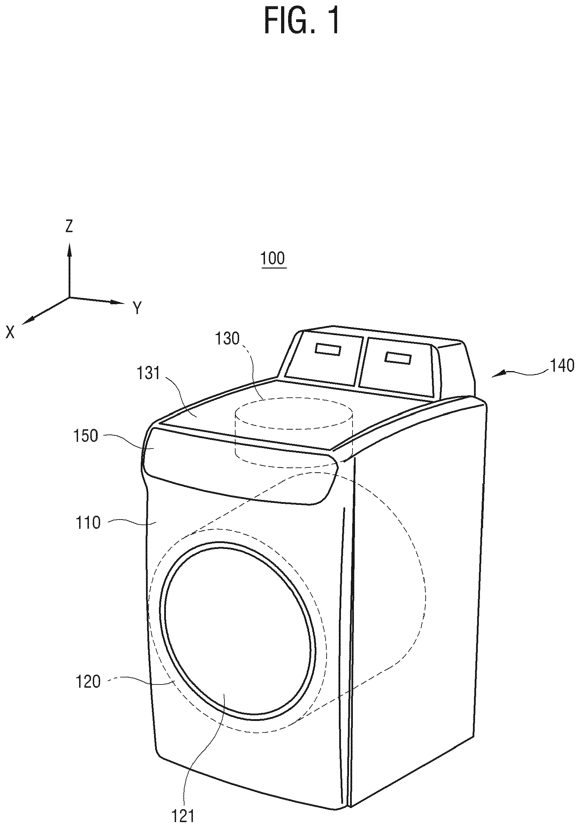

FIG. 1 is a perspective view showing an outer appearance of a washing machine according to an embodiment of the disclosure.

As shown in FIG. 1, a washing machine 100 according to an embodiment of the disclosure includes a main housing 110 forming an outer appearance and internally having an accommodating space, a first washing tub 120 placed in a lower portion of the main housing 110 and allowing laundry to be subjected to a washing process, a second washing tub 130 placed in an upper portion of the main housing 110 and allowing laundry to be subjected to a washing process, a detergent supplying unit 140 placed on a top of the main housing 110 and supplying detergent and softener for washing to each of the first washing tub 120 and the second washing tub 130, and a user interface unit 150 provided in a front upper portion of the main housing 110 and allowing a user to control the washing machine 100.

In the accompanying drawings, 'X', `Y' and 'Z' indicate three directions orthogonal to one another in a space. The opposite directions to 'X', `Y' and 'Z' are represented with '-X', '-Y' and '-Z', respectively. In the following embodiments, for convenience of description, the direction of 'X' may represent a frontward direction of the washing machine 100, the direction of `-X' may represent a backward direction of the washing machine 100, the directions of 'Y' and '-Y' respectively represent leftward and rightward directions of the washing machine, and the direction of 'Z' may represent an upward direction of the washing machine 100. Further, when a plane is parallel with two axes among the axes of three directions, the other one axis is in a direction normal to the plane. For example, the direction of 'Z' is normal to the plane of `X-Y'.

According to an embodiment, the washing machine 100 includes two washing tubs, such as the first washing tub 120 of a front-loading type and the second washing tub 130 of a top-loading type. However, the concept of the disclosure is not restricted by the number and type of washing tubs. This embodiment is merely an example of the washing machine 100 according to the concept of the disclosure. For example, there may be three or more washing tubs, and at least one of the front-loading type and the top-loading type may be selectively applied to each washing tub.

The main housing 110 includes a cabinet made of metal or plastic and generally shaped like a rectangular parallelepiped. The main housing 110 includes a first door 121 to cover a first opening provided at a front side and communicating with the inside of the first washing tub 120, and a second door 131 to cover a second opening provided at a top side and communicating with the inside of the second washing tub 130. A user may open the first door 121 to put laundry in or take laundry out of the first washing tub 120 through the first opening, and may open the second door 131 to put laundry in or take laundry out of the second washing tub 130 through the second opening. Of course, the first door 121 is closed while the washing process is being performed in the first washing tub 120, and the second door 131 is closed while the washing process is being performed in the second washing tub 130, thereby preventing laundry, water, etc. from coming out through the first opening or the second opening.

The first door 121 and the second door 131 include transparent plastic, glass, or the like transparent material, through which a user can see the insides of the first washing tub 120 and the second washing tub 130.

The first washing tub 120 is shaped like a cylinder lying substantially in parallel with the direction of 'X', and opened at a side facing the first opening of the main housing 110. The first washing tub 120 is connected to a motor provided inside the main housing 110, and driven by the motor to spin with respect to the axial line in the direction of 'X' during a washing process. The first washing tub 120 includes a supplying hole through which water for washing is supplied, and a discharging hole through which water is drained outward after the washing is completed.

Like this, the first washing tub 120 is provided as the front-loading type. The first washing tub 120 receives water mixed with the detergent or the softener and then spins to perform washing in such a manner that laundry is lifted up and falls.

The second washing tub 130 is disposed above the first washing tub 120. The second washing tub 130 is shaped like a cylinder standing substantially in the direction of 'Z', and opened at a side facing the second opening of the main housing 110. The second washing tub 130 is connected to a motor provided in the main housing 110, and driven by the motor to spin with respect to the axial line in the direction of 'Z' during a washing process. The second washing tub 130 includes a supplying hole through which water for washing is supplied, and a discharging hole through which water is drained outward after the washing is completed.

Like this, the second washing tub 130 is provided as the top-loading type. The second washing tub 130 includes a pulsator on the bottom thereof, and does the laundry based on water flow generated by the pulsator.

The washing machine 100 includes such two washing tubs, i.e. the first washing tub 120 and the second washing tub 130 to promote convenience in use. When a user's typical washing pattern is taken into account, the user often divides clothes into some groups according to the kinds, colors, materials, etc. and washes each individual group rather than all the kinds of clothes in a lump. For example, a general user may have a washing pattern that separates white clothes from colored clothes, separates under clothing from outer clothing, separates baby clothes from adult clothes, and so on. Thus, the washing machine 100 according to this embodiment can separately do the laundry in the second washing tub 130 while doing the laundry in the first washing tub 120.

Although each capacity of the first washing tub 120 and the second washing tub 130 is not limited to a specific valve, the first washing tub 120 of the front-loading type may have larger capacity than the second washing tub 130 of the top-loading type in consideration of the convenience in use. For example, the first washing tub 120 may have a capacity of 17kg to 20kg, and the second washing tub 130 may have a capacity of 3kg to 4kg.

The detergent supplying unit 140 is provided at an upper side of the housing 110. The detergent supplying unit 140 is configured to store the detergent and the softener, and selectively supplies the detergent or the softener to the first washing tub 120 and the second washing tub 130 based on progress of a washing process. The detergent or the softener supplied from the detergent supplying unit 140 is put into the first washing tub 120 or the second washing tub 130 as mixed with water separately supplied from the outside. The detailed structures of the detergent supplying unit 140 will be described later.

The user interface unit 150 includes an electronic or physical button allowing a user to make an input, and a display configured to display a current status of the washing machine 100. The display may employ a light emitting diode (LED) to display a digit or a text, or may employ an organic light emitting diode (OLED) or a liquid crystal display (LCD). The user interface unit 150 is provided to receive a user input and designate general washing processes.

Below, a control structure for the washing machine 100 will be described.

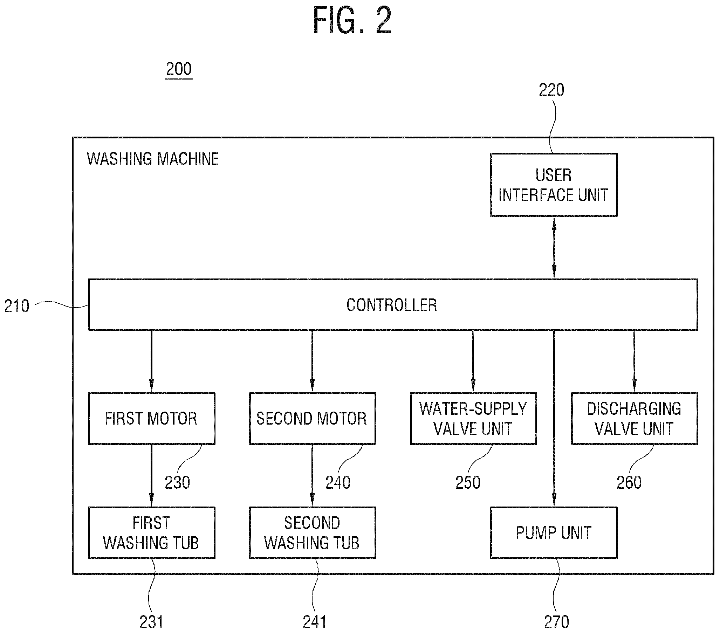

FIG. 2 is a block diagram showing a control structure of a washing machine according to an embodiment of the disclosure.

As shown in FIG. 2, a washing machine 200 includes a controller 210 for controlling general operations such as a washing process of the washing machine 200, a user interface unit 220 for transmitting a user's input command to the controller 210, a first motor 230 for driving a first washing tub 231 to spin, a second motor 240 for driving a second washing tub 241 to spin, a water-supply valve unit 250 including a plurality of valves to open and close a channel for supplying water to the first washing tub 231 and the second washing tub 241, a discharging valve unit 260 including a plurality of valves to open and close a channel for draining water out of the first washing tub 231 and the second washing tub 241, and a pump unit 270 comprising a plurality of pumps to generate air pressure for supplying the detergent and the softener from the detergent supplying unit.

The controller 210 is embodied by a circuit on a printed circuit board including electronic parts such as a chipset, a processor, a central processing unit (CPU), a memory, etc. The controller 210 transmits a control signal to various elements of the washing machine 200 such as the first motor 230 and the second motor 240, and thus controls operations of these elements. There are many types of control signals, which include an electric signal having a preset voltage level, a signal classified into two high and low levels, or a toggle signal indicating only presence of a transmitted signal.

The first motor 230 and the second motor 240 are respectively coupled to the shafts of the first washing tub 231 and the second washing tub 241, and drive the first washing tub 231 and the second washing tub 241 to spin forward and backward under control of the controller 210. A mechanical power transmission structure such as a link, a gear, and the like for transmitting rotary power may be applied between the first motor 230 and the first washing tub 231, and between the second motor 240 and the second washing tub 241.

The water-supply valve unit 250 is provided on a plurality of water-supply channels through which tap water from the outside is supplied to the insides of the first washing tub 231 and the second washing tub 241. For example, the plurality of water-supply channels includes a hot water-supply channel and a cold water-supply channel for the first washing tub 231, and a hot water-supply channel and a cold water-supply channel for the second washing tub 241. The water-supply valve unit 250 includes a plurality of valves provided to open and close these water-supply channels. The opening/closing operations of the valves are performed under control of the controller 210.

The discharging valve unit 260 is provided on a plurality of draining channels through which water is drained out of the first washing tub 231 and the second washing tub 241. The discharging valve unit 260 includes a plurality of valves provided to open and close the plurality of draining channels under control of the controller 210.

The pump unit 270 performs a pumping operation to pump a predetermined amount of detergent or softener out of the container of the detergent supplying unit. The detergent supplying unit includes a first container for storing the detergent, and a second container for storing the softener. In this case, the pump unit 270 includes a first pump for pumping the detergent from the first container into the first washing tub 231, a second pump for pumping the softener from the second container into the first washing tub 231, a third pump for pumping the detergent from the first container into the second washing tub 241, and a fourth pump for pumping the softener from the second container into the second washing tub 241. The controller 210 controls each individual pump according to the washing processes.

However, the pump unit 270 applied to the washing machine to realize the concept of the disclosure is not limited to this exemplary structure, and may be designed to have various structures. For example, the pump unit 270 includes a first pump corresponding to the detergent, and a second pump corresponding to the softener. In this case, the first pump may selectively supply the detergent to the first washing tub 231 or the second washing tub 241 under control of the valve provided on the supplying path for the detergent. Likewise, the second pump may selectively supply the softener to the first washing tub 231 or the second washing tub 241 under control of the valve provided on the supplying path for the softener.

In this embodiment, the elements to be controlled by the controller 210 are described. These elements are some of the elements in the washing machine 200 substantially controllable by the controller 210.

Under such a control structure of the washing machine 200, the washing machine 200 according to an embodiment includes a plurality of washing tubs 231 and 241, a container to be filled with the detergent, and a channel housing provided between the container and the plurality of washing tubs 231 and 241 and forming channels through which the detergent is supplied from the container to the plurality of washing tubs 231 and 241. Here, the controller 210 controls the pump unit 270 to supply the detergent to one selected among the plurality of washing tubs 231 and 241.

Thus, the washing machine 200 is improved in convenience for a user as the detergent stored in one container is selectively supplied to the plurality of washing tubs 231 and 241.

Below, a structure of a detergent supplying unit according to an embodiment of the disclosure will be described.

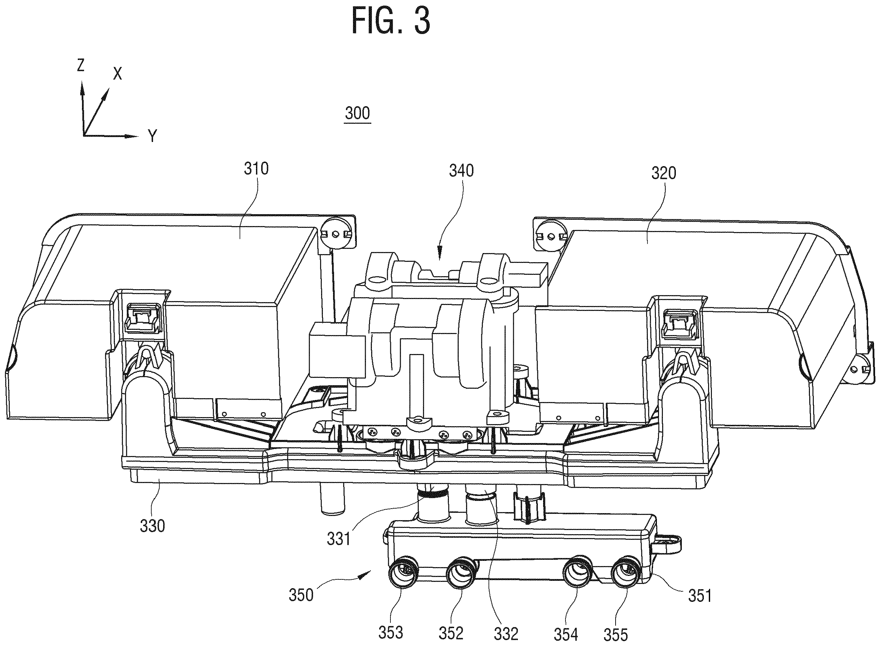

FIG. 3 is a partial perspective view showing a detergent supplying unit of a washing machine according to an embodiment of the disclosure.

As shown in FIG. 3, the interior of the detergent supplying unit 300 placed at an upper side of the housing of the washing machine is shown when its cover forming an outer appearance is taken off. FIG. 3 shows the detergent supplying unit 300 viewed from the back of the washing machine. The detergent supplying unit 300 includes a first container 310 for storing detergent, a second container 320 for storing softener, a detergent channel housing 330 coupled to the first container 310 and the second container 320 and configured to form channels through which the detergent and the softener are moved, a pump unit 340 installed in the middle of the detergent channel housing 330 and forming air pressure to move the detergent or the softener through the channels, and a water supplying unit 350 coupled to the bottom of the detergent channel housing 330 and supplying water together with the detergent or the softener discharged from the detergent channel housing 330 to the first washing tub or the second washing tub.

The first container 310 and the second container 320 are respectively filled with the detergent and the softener. The first container 310 and the second container 320 include supplying holes to communicate with the channels in the detergent channel housing 330. The pump unit 340 pumps a predetermined amount of detergent and softener from the first container 310 and the second container 320 to the channels through the supplying holes. The first container 310 and the second container 320 are provided to be selectively opened at one side so as to be refilled with the detergent and the softener by a user. Although there are no limits to the materials of the first container 310 and the second container 320, the detergent and the softener are stored in the first container 310 and the second container 320 for a long time and therefore the first container 310 and the second container 320 may be made of plastic which does not react with the detergent and the softener.

The detergent channel housing 330 forms the channels respectively connected to the first container 310 and the second container 320. The detergent and the softener may be hardened by chemical reaction or deteriorate washing performance when they are mixed. Thus, the detergent channel housing 330 include separate channels to prevent the detergent and the softener from being mixed. The detergent channel housing 330 is manufactured by plastic injection molding in such a manner that an upper plate and ab lower plate are assembled into the detergent channel housing 330 for convenience of manufacture.

Referring to FIG. 3, the detergent channel housing 330 are formed with the channel for the detergent at the left side, and the channel for the softener at the right side. The channel for the detergent branches off into a channel corresponding to the first washing tub and a channel corresponding to the second washing tub, and the channel for the softener also branches off into a channel corresponding to the first washing tub and a channel corresponding to the second washing tub. A discharging hole 331 for the detergent and the softener corresponding to the first washing tub and a discharging hole 332 for the detergent and the softener corresponding to the second washing tub protrude from the middle bottom of the detergent channel housing 330. These discharging holes 331 and 332 are airtightly coupled to the upper side of the water supplying unit 350 to communicate with the water supplying unit 350.

The pump unit 340 includes four pumps to pump one of the detergent and the softener for the first washing tub and the second washing tub. Each pump is placed in the middle region of the detergent channel housing 330, generates air pressure in the corresponding channel, and sucks a predetermined amount of detergent or softener through the corresponding channel. The pumps discharge the sucked detergent or the softener through the corresponding discharging holes 331 and 332. Because the supply of the detergent and the supply of the softener are needed according to the washing tubs, the number of pumps included in the pump unit 340 is twice the number of washing tubs.

The water supplying unit 350 includes a water-supplying-unit housing 351, hot-water supplying holes 352 and 353 formed at one portion of the water-supplying-unit housing 351 and supplying hot water, and cold-water supplying holes 354 and 355 formed at the other portion of the water-supplying-unit housing 351 and supplying cold water.

The water-supplying-unit housing 351 is internally formed with water-supply channels through which hot water and cold water supplied from the hot-water supplying holes 352 and 353 and the cold-water supplying holes 354 and 355 flow. Such water-supply channels communicate with the discharging holes 331 and 332 of the detergent channel housing 330 coupled to the top side of the water-supplying-unit housing 351. Thus, the detergent or the softener discharged from the detergent channel housing 330 is supplied to the first washing tub or the second washing tub as mixed with water flowing along the water-supply channel.

The hot-water supplying holes 352 and 353 include the hot-water supplying hole 352 for supplying hot water to the first washing tub, and the hot-water supplying hole 353 for supplying hot water to the second washing tub. Likewise, the cold-water supplying holes 354 and 355 include the cold-water supplying hole 354 for supplying cold water to the first washing tub, and the cold-water supplying hole 355 for supplying cold-water to the second washing tub. Inside the water-supplying-unit housing 351, the channel of the hot-water supplying hole 352 and the channel of the cold-water supplying hole 354 join corresponding to the first washing tub, and the joined channel communicates with the discharging hole corresponding to the first washing tub provided in the water-supplying-unit housing 351. Likewise, the channel of the hot-water supplying hole 353 and the channel of the cold-water supplying hole 355 join corresponding to the second washing tub, and the joined channel communicates with the discharging hole corresponding to the second washing tub provided in the water-supplying-unit housing 351.

Below, the structure of the detergent channel housing 330 of the detergent supplying unit 300 will be described.

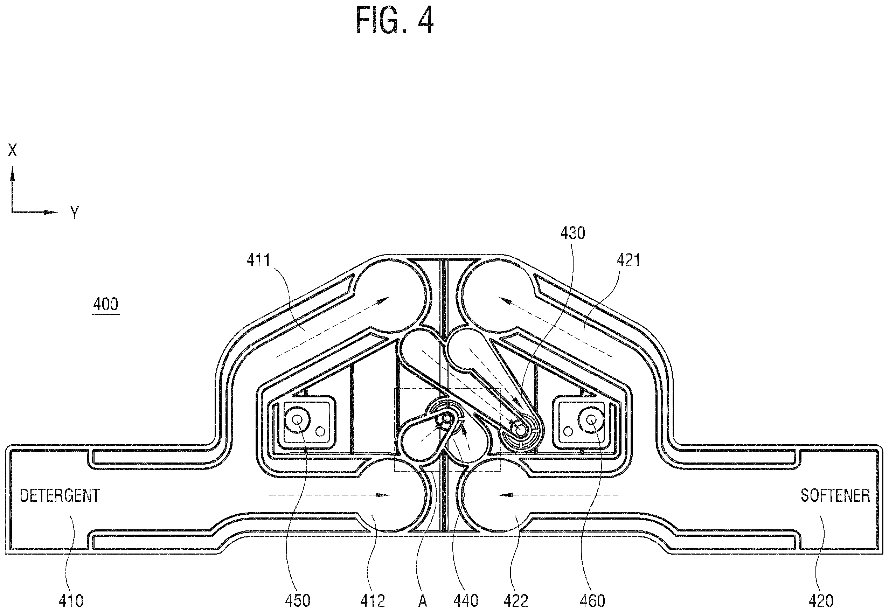

FIG. 4 is a partial plan view showing an inside of a lower plate of a detergent channel housing applied to a washing machine according to an embodiment of the disclosure.

As shown in FIG. 4, the detergent channel housing is internally formed with channels 410, 411, 412, 420, 421 and 422 for the detergent and the softener. A lower plate 400 of the detergent channel housing is approximately shaped corresponding to the profiles of such channels. To form the channels 410, 411, 412, 420, 421 and 422, the detergent channel housing in this embodiment does not employ a hose, a tube or the like, but the upper plate and the lower plate 400 formed as a single body by injection molding are assembled into the detergent channel housing, thereby improving productivity and saving an inner space of the washing machine.

The channels 410, 411, 412, 420, 421 and 422 are divided into detergent channels 410, 411 and 412 for the detergent, and softener channel 420, 421 and 422 for the softener. The detergent channels 410, 411 and 412 and the softener channel 420, 421 and 422 are isolated from each other to prevent the detergent and the softener from being mixed. The detergent channels 410, 411 and 412 includes a detergent main channel 410 extended from the left side of FIG. 4 in the direction of 'Y', a first detergent branch channel 411 branched from the detergent main channel 410 and connected to a first discharger 430, and a second detergent branch channel 412 branched from the detergent main channel 410 and connected to a second discharger 440. Likewise, the softener channel 420, 421 and 422 includes a softener main channel 420 extended from the right side of FIG. 4 in the direction of `-Y', a first softener branch channel 421 branched from the softener main channel 420 and connected to the first discharger 430, and a second softener branch channel 422 branched from the softener main channel 420 and connected to the second discharger 440.

Meanwhile, the detergent channels 410, 411 and 412 may be filled with the detergent, and the first detergent branch channel411 and the second detergent branch channel412 may be structured not to be branched from the detergent main channel 410. For example, when the detergent is selectively supplied to the first washing tub and the second washing tub by a single pump corresponding to the detergent, the detergent main channel 410 does not branch off into the first detergent branch channel411 and the second detergent branch channel412 but extends as one path. Similarly, the softener channel 420, 421 and 422 may be filled with the softener, and the first softener branch channel 421 and the second softener branch channel 422 may be structured not to be branched from the softener main channel 420. For example, when the softener is selectively supplied to the first washing tub and the second washing tub by a single pump corresponding to the softener, the softener main channel 420 does not branch off into the first softener branch channel 421 and the second softener branch channel 422 but extends as one path.

Here, the first discharger 430 and the second discharger 440 are configured to discharge the detergent and the softener to the water supplying unit placed under the detergent channel housing. Each of the first discharger 430 and the second discharger 440 corresponds to one of the first washing tub and the second washing tub. The detailed structures of the first discharger 430 and the second discharger 440 will be described later.

The detergent main channel 410 is connected to the first container in which the detergent is stored, so that a predetermined amount of detergent can be moved from the first container by a pumping operation of the pump. When the pump corresponding to the first washing tub performs the pumping operation, the detergent moves from the branch point of the detergent main channel 410 toward the first detergent branch channel 411. The detergent moving toward the first detergent branch channel 411 is discharged below the detergent channel housing through the first discharger 430. On the other hand, when the pump corresponding to the second washing tub performs the pumping operation, the detergent moves from the branch point of the detergent main channel 410 to the second detergent branch channel 412. The detergent moving toward the second detergent branch channel 412 is discharged below the detergent channel housing through the second discharger 440.

Meanwhile, the softener main channel 420 is connected to the second container in which the softener is stored, so that a predetermined amount of softener can be moved from the second container by a pumping operation of the pump. When the pump corresponding to the first washing tub performs the pumping operation, the softener moves from the branch point of the softener main channel 420 toward the first softener branch channel 421. The softener moving toward the first softener branch channel 421 is discharged below the softener channel housing through the first discharger 430. On the other hand, when the pump corresponding to the second washing tub performs the pumping operation, the softener moves from the branch point of the softener main channel 420 toward the second softener branch channel 422. The softener moving toward the second softener branch channel 422 is discharged below the softener channel housing through the second discharger 440.

Meanwhile, on the lower plate of the detergent channel housing are formed a backflow detergent discharging hole 450 for discharging the detergent flowing back to the upper plate of the detergent channel housing, and a backflow softener discharging hole 460 for discharging the softener flowing back to the upper plate of the detergent channel housing. Both the backflow detergent discharging hole 450 and the backflow softener discharging hole 460 communicate with the first washing tub and the second washing tub. The detergent discharged through the backflow detergent discharging hole 450 and the softener discharged through the backflow softener discharging hole 460 are discharged to one of the first washing tub and the second washing tub, in which the current washing process is carried out. A structure prepared for the backflow of the detergent and the softener toward the upper plate of the detergent channel housing will be described later.

Below, the structures of the first discharger 430 and the second discharger 440 will be described. The structures of the first discharger 430 and the second discharger 440 are substantially similar to each other, and therefore the structure of only the second discharger 440 will be representatively described in the following embodiment.

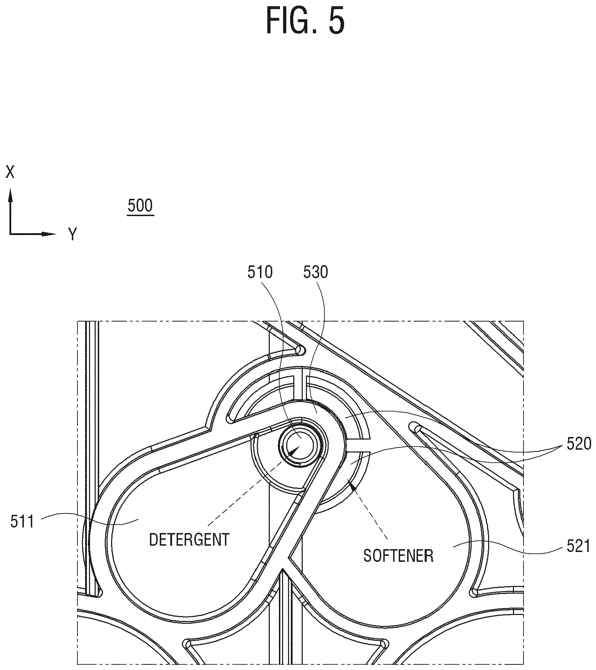

FIG. 5 is a partial plane view showing an enlarged area A of FIG. 4.

As shown in FIG. 5, a second discharger 500 of the detergent channel housing includes a detergent discharging hole 510 connected to a second detergent branch channel 511, and a softener discharging hole 520 connected to a second softener branch channel 521. In FIG. 5, the second discharger 500 is viewed from above the lower plate of the detergent channel housing. The detergent moves through the second detergent branch channel 511, and the softener moves through the second softener branch channel 521. The second detergent branch channel 511 and the detergent discharging hole 510 are partitioned from the second softener branch channel 521 and the softener discharging hole 520 by a partition wall 530, thereby preventing the detergent from being mixed with the softener.

The detergent discharging hole 510 is formed as a circular hole having a predetermined diameter, but the softener discharging hole is formed as a hole extended with a predetermined length along an outer circumference of the detergent discharging hole 510. In other words, the softener discharging hole 520 is formed to surround the outer circumference of the detergent discharging hole 510. However, the second discharger 500 is not limited to this exemplary structure, but may have various structures as long as the detergent discharging hole 510 and the softener discharging hole 520 are separated from each other for the purpose of preventing the detergent and the softener from being mixed with each other. For example, the softener discharging hole 520 may be formed as a circular hole, and the detergent discharging hole 510 may be formed as a hole extended along the outer circumference of the softener discharging hole 520.

Below, the structure of the second discharger 500 protruding from the bottom of the detergent channel housing so as to communicate with the water supplying unit will be described.

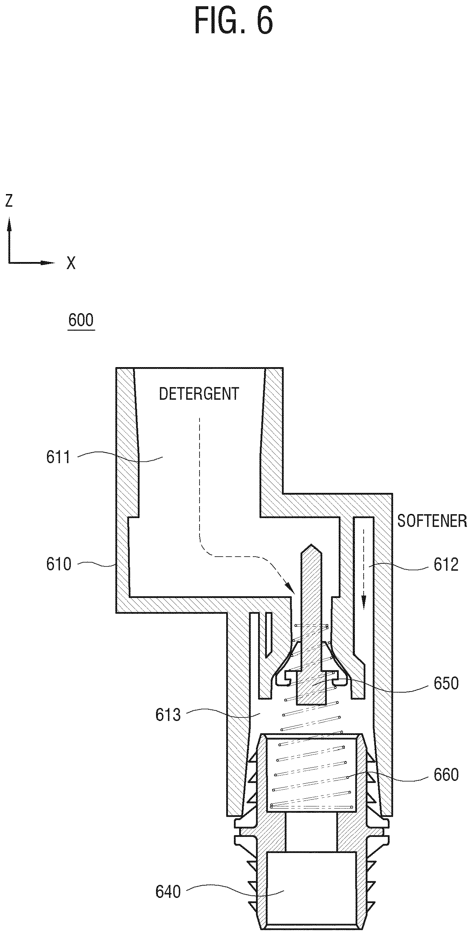

FIG. 6 is a partial cross-sectional view showing a structure of a second discharger coupled to a water supplying unit in a washing machine according to an embodiment of the disclosure.

As shown in FIG. 6, a second discharger 600 includes a first channel 611 through which the detergent from the detergent discharging hole moves; a second channel 612 through which the softener from the softener discharging hole moves, a discharging pipe 610 extended from the bottom of the detergent channel housing and forming a third channel 613 where the first channel 611 and the second channel 612 join; an outlet pipe 640 provided at an outlet of the third channel 613 of the discharging pipe 610 so as to communicate with the water supplying unit; a valve 650 provided at an outlet of the first channel 611 communicating with the third channel 613; and a spring 650 supported on the outlet pipe 640 and biasing the valve 650 to block the outlet of the first channel 611.

With this structure, the supply of the detergent and the supply of the softener will be described.

In the case of supplying the detergent, when the pump corresponding to the detergent performs the pumping operation, the detergent moves from the detergent discharging hole to the first channel 611. As the air pressure is changed in the first channel 611 by the operation of the pump, the valve 650 overcomes the elasticity of the spring 650 and moves toward the outlet pipe 640, thereby opening the outlet of the first channel 611. As the valve 650 is opened, the detergent moves from the first channel 611 to the third channel 613, and is then supplied to the water supplying unit through the outlet pipe 640. When the operation of the pump is completed, the air pressure in the first channel 611 is returned to an original state, and the valve 650 closes the outlet of the first channel 611 by the elasticity of the spring 650.

In the case of supplying the softener, when the pump corresponding to the softener performs the pumping operation, the softener moves from the softener discharging hole to the second channel 612. Because the second channel 612 and the third channel 613 communicate with each other without presence of additional element, the softener is supplied to the water supplying unit through the outlet pipe 640 via the second channel 612 and the third channel 613. In this case, the valve 650 closes the outlet of the first channel 611 by the spring 650, and therefore the softener moving through the second channel 612 and the third channel 613 does not flow back toward the first channel 611.

Referring to the accompanying drawing, the second channel 612 is vertically extended, but the first channel 611 is bent and extended having a horizontal region. Although the detergent flows back to the second channel 612, there is no need to worry about that the flowing-back detergent remains in the second channel 612. On the other hand, when the softener flows back to the first channel 611, there is concern about the residues of the softener in the horizontal region. Thus, the foregoing structure of the valve 650 can prevent the softener from flowing back to the first channel 611 even though the first channel 611 and the second channel 612 are formed as one discharging pipe 610.

In this embodiment, it was described that the valve 650 and the spring 650 were provided only in the outlet of the first channel 611. However, according to the internal structures of the discharging pipe 610, the valve 650 and the spring 650 may be provided only in the outlet of the second channel 612, or may be provided both the outlet of the first channel 611 and the outlet of the second channel 612.

Further, the spring 650 in this embodiment is a coil spring. However, there are no limits to the shape and kind of the spring as long as the valve 650 can be biased to close the outlet of the first channel 611.

Below, the structure of the upper plate of the detergent channel housing will be described.

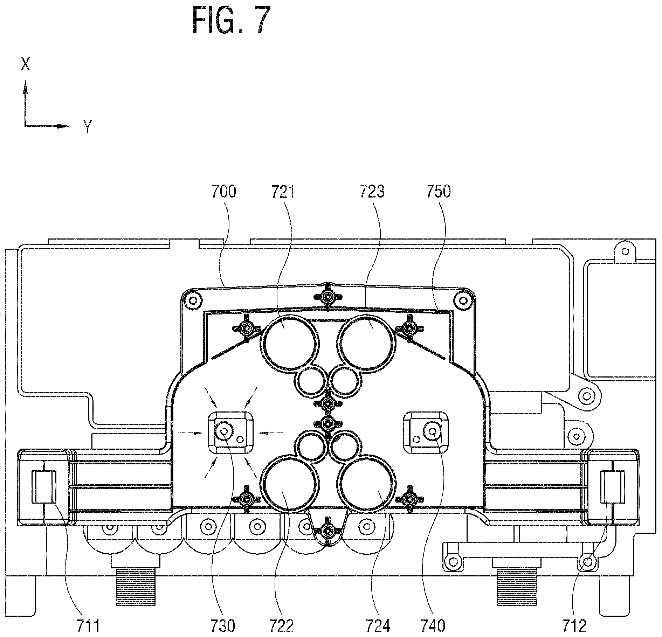

FIG. 7 is a partial plan view showing an upper plate of a detergent channel housing applied to a washing machine according to an embodiment of the disclosure.

As shown in FIG. 7, an upper plate 700 of the detergent channel housing is formed as a single body by injection molding like the lower plate 400 (see FIG. 4) of the foregoing detergent channel housing. The upper plate 700 and the lower plate are assembled into the detergent channel housing, and therefore more simplify their manufacturing and assembling and more save the inner space of the washing machine than a channel based on a hose or a tube.

A first container coupler 711 communicating with the first container filled with the detergent and a second container coupler 712 communicating with the second container filled with the softener are respectively provided at the left and right sides of the upper plate 700 of the detergent channel housing. along the channels in the detergent channel housing, the detergent moves from the first container through the first container coupler 711, and the softener moves from the second container through the second container coupler 712.

On the upper plate 700 of the detergent channel housing are provided pump installation portions 721, 722, 723, and 724 in which four pumps are respectively installed. The pump installation portions 721, 722, 723, and 724 include through holes formed on the upper plate 700, and each pump generates air pressure in the channel inside the detergent channel housing and performs the pumping operation as installed in the pump installation portions 721, 722, 723, and 724.

Generally, the detergent or the softener is unlikely to flow back to the upper plate 700. However, the washing machine generates vibration because the washing tube spins forward and backward by the motor, and this vibration may cause the detergent or the softener to flow back to the upper plate 700 through the pump installation portions 721, 722, 723, and 724. Besides, various factors may cause the detergent or the softener to flow back to the upper plate 700 even during the pumping operation of the pump.

To discharge such flowing-back detergent or softeners to the washing tub, the detergent channel housing includes a backflow detergent discharging hole 730 formed to discharge the detergent at a first area of the upper plate 700, a backflow softener discharging hole 740 formed to discharge the softener at a second area of the upper plate 700, and a leakage preventing rib 750 surrounding the edge of the upper plate 700 and standing on the upper plate 700 to prevent the detergent or softener on the upper plate 700 from falling out of the upper plate 700.

The backflow detergent discharging hole 730 and the backflow softener discharging hole 740 are communicating with the elements of the same terms as described above with reference to FIG. 4. In other words, the detergent flowing back to the upper plate 700 is discharged to the washing tub through the backflow detergent discharging hole 730, and the softener flowing back to the upper plate 700 is discharged to the washing tub through the backflow softener discharging hole 740.

The leakage preventing rib 750 stands at a predetermined height from the upper plate 700 to surround all the backflow detergent discharging hole 730, the backflow softener discharging hole 740, and the pump installation portions 721, 722, 723, and 724. The leakage preventing rib 750 prevents the detergent or the softener flowing back to the upper plate 700 from being poured over electronic parts and the like elements placed outside the upper plate 700, thereby preventing the corresponding elements from failure.

Below, the water supplying unit to which the detergent and the softener are supplied from the detergent channel housing will be described.

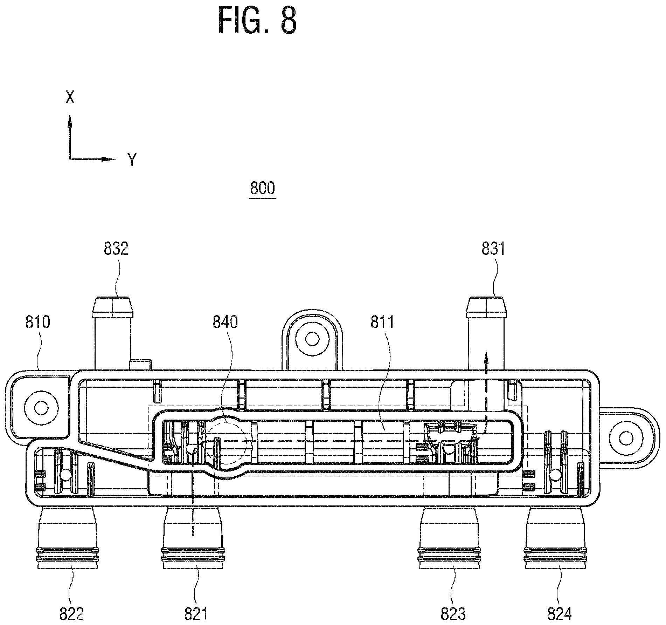

FIG. 8 is a plan view showing a path through which water is supplied to a first washing tub in a water supplying unit of a washing machine according to an embodiment of the disclosure.

As shown in FIG. 8, a water supplying unit 800 includes a water-supplying-unit housing 810 internally formed with a channel, cold-water supplying holes 821 and 822 through which cold water is supplied to the channel of the water-supplying-unit housing 810, hot-water supplying holes 823 and 824 through which hot water is supplied to the channel of the water-supplying-unit housing 810, a first discharging hole 831 communicating with the channel and discharging water to the first washing tub, and a second discharging hole 832 communicating with the channel and discharging water to the second washing tub.

The channel of the water-supplying-unit housing 810 includes a first water-supply channel 811 for the first washing tub, and a second water-supply channel for the second washing tub. The first water-supply channel 811 is isolated from the second water-supply channel, thereby preventing water, the detergent, the softener flowing in the first water-supply channel 811 from entering the second water-supply channel. In this embodiment, FIG. 8 is shown as if the first water-supply channel 811 overlaps with the second water-supply channel, because it is the plan view. Actually, the first water-supply channel 811 is three-dimensionally separated from the second water-supply channel.

The first water-supply channel 811 communicates with a first cold-water supplying hole 821 for supplying cold water, a first hot-water supplying hole 823 for supplying hot water, and the first discharging hole 831. In the first water-supply channel 811, the channel extended from the first cold-water supplying hole 821 and the channel extended from the first hot-water supplying hole 823 join at a predetermined position, and are connected to the first discharging hole 831. In other words, the first water-supply channel 811 is structured to have two inlets and one outlet.

Here, the first water-supply channel 811 is extended from the first cold-water supplying hole 821 up to the first hot-water supplying hole 823, and extended again from the first hot-water supplying hole 823 to the first discharging hole 831. In other words, the first water-supply channel 811 is extended from a cold-water supplying position up to a hot-water supplying position, and extended again from the hot-water supplying position to the first discharging hole 831. Such a structure is to reduce room for residues of water, the detergent, the softener, etc. in the first water-supply channel 811 by considering that cold water is typically used by a user more than hot water.

At one side of the first water-supply channel 811 is formed a first detergent supplier 840 to which the detergent and the softener are supplied. As described above, the first detergent supplier 840 is configured so that the detergent or the softener discharged from the detergent channel housing can be put into the water-supplying-unit housing 810 based on the washing process in the first washing tub. The first detergent supplier 840 is coupled to and communicates with the first discharger or the second discharger of the detergent channel housing described in the foregoing embodiments.

Here, the first detergent supplier 840 is placed at a downstream position from the position where cold water is supplied from the first water-supply channel 811 through at least the first cold-water supplying hole 821. Here, that the first detergent supplier 840 is positioned more downstream than the first cold-water supplying hole 821 means that a position where the cold water is injected precedes the position where the detergent or softener is injected, in the first water-supply channel 811 with respect to a water flowing direction. The detergent or the softener injected into the first water-supply channel 811 through the first detergent supplier 840 is mixed with cold water supplied through the first cold-water supplying hole 821, moves along the first water-supply channel 811, and is finally discharged through the first discharging hole 831.

Further, the first detergent supplier 840 may be designed to be positioned more downstream than the position where cold water is supplied through the first cold-water supplying hole 821 and the position where hot water is supplied through the first hot-water supplying hole 823, in the first water-supply channel 811.

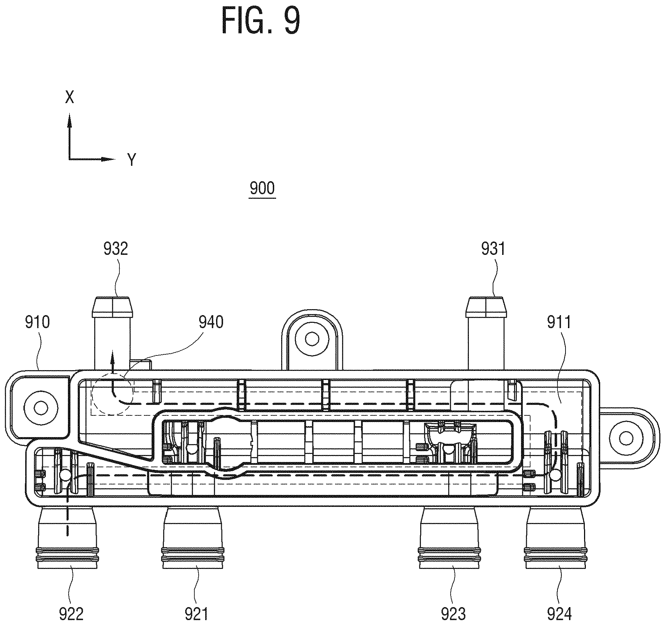

FIG. 9 is a plan view showing a path through which water is supplied to a second washing tub in a water supplying unit of a washing machine according to an embodiment of the disclosure.

As shown in FIG. 9, a water supplying unit 900 includes a water-supplying-unit housing 910 internally formed with a channel, cold-water supplying holes 921 and 922 through which cold water is supplied to the channel of the water-supplying-unit housing 910, hot-water supplying holes 923 and 924 through which holt water is supplied to the channel of the water-supplying-unit housing 910, a first discharging hole 931 communicating with the channel and discharging water to the first washing tub, and a second discharging hole 932 communicating with the channel and discharging water to the second washing tub.

The channel of the water-supplying-unit housing 910 includes a first water-supply channel for the first washing tub, and a second water-supply channel 911 for the second washing tub. The features of the first water-supply channel have previously been described in the foregoing embodiment.

The second water-supply channel 911 communicates with a second cold-water supplying hole 922 for supplying cold water, a second hot-water supplying hole 924 for supplying hot water, and the second discharging hole 932. In the second water-supply channel 911, the channel extended from the second cold-water supplying hole 922 and the channel extended from the second hot-water supplying hole 924 join at a predetermined position, and are connected to the second discharging hole 932. In other words, the second water-supply channel 911 is structured to have two inlets and one outlet like those of the first water-supply channel.

Here, the second water-supply channel 911 is extended from the second cold-water supplying hole 922 up to the second hot-water supplying hole 924, and extended again from the second hot-water supplying hole 924 to the second discharging hole 932. In other words, the second water-supply channel 911 is extended from a cold-water supplying position up to a hot-water supplying position, and extended again from the hot-water supplying position to the second discharging hole 932.

At one side of the second water-supply channel 911 is formed a second detergent supplier 940 to which the detergent and the softener are supplied. As described above, the second detergent supplier 940 is configured so that the detergent or the softener discharged from the detergent channel housing can be put into the water-supplying-unit housing 910 based on the washing process in the second washing tub. The second detergent supplier 940 is coupled to and communicates with the first discharger or the second discharger of the detergent channel housing described in the foregoing embodiments.

The position of the second detergent supplier 940 is placed at a downstream position from the position where cold water is supplied through the second cold-water supplying hole 922 and the position where hot water is supplied through the second hot-water supplying hole 924, in the second water-supply channel 911. Thus, the detergent or the softener injected from the second detergent supplier 940 into the second water-supply channel 911 is mixed with cold water or hot water supplied along the second water-supply channel 911, and then discharged to the second washing tub.

Thus, the water supplying unit 900 minimizes the residues of the detergent or the softener in the channel.

Below, a structure where the channel of the water supplying unit is designed differently from that of the foregoing embodiment will be described.

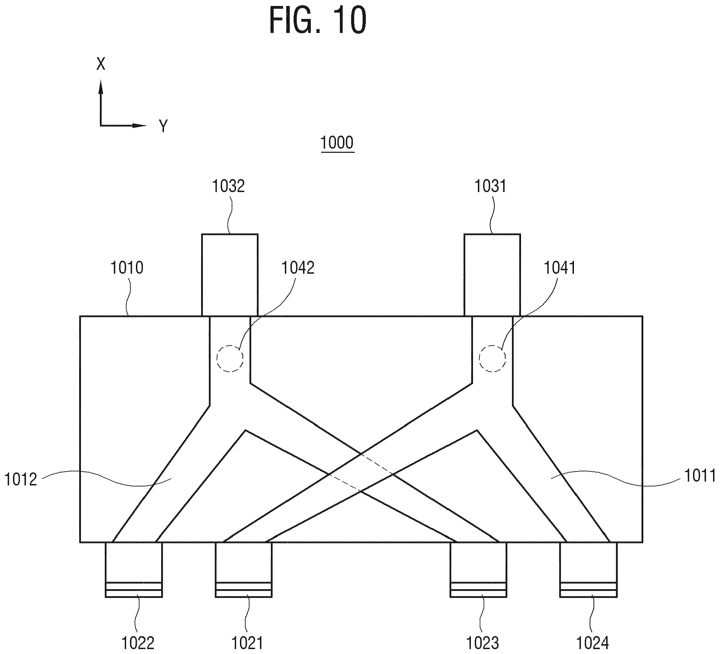

FIG. 10 illustrates a schematic structure of channels in a water supplying unit of a washing machine according to an embodiment of the disclosure.

As shown in FIG. 10, a water supplying unit 1000 includes a water-supplying-unit housing 1010, a first cold-water supplying hole 1021 and a second cold-water supplying hole 1022 for supplying cold water to a channel in the water-supplying-unit housing 1010, a first hot-water supplying hole 1023 and a second hot-water supplying hole 1024 for supplying hot water to the channel in the water-supplying-unit housing 1010, a first discharging hole 1031 for discharging water to be supplied to the first washing tub, and a second discharging hole 1032 for discharging water to be supplied to the second washing tub.

The channel in the water-supplying-unit housing 1010 includes a first channel 1011 which communicates with the first cold-water supplying hole 1021, the first hot-water supplying hole 1023 and the first discharging hole 1031; and a second channel 1012 which communicates with the second cold-water supplying hole 1022, the second hot-water supplying hole 1024 and the second discharging hole 1032. The first channel 1011 and the second channel 1012 are separated from each other, and shown in the shape of an inverted Y in FIG. 10.

A first detergent supplier 1041 for supplying the detergent or the softener is provided on the first channel 1011, and a second detergent supplier 1042 for supplying the detergent or the softener is provided on the second channel 1012. The functions of the first detergent supplier 1041 and the second detergent supplier 1042 are the same as those described above in the foregoing embodiment.

The first detergent supplier 1041 is placed at a downstream position from a position where the channel for supplying cold water from the first cold-water supplying hole 1021 and the channel for supplying hot water from the first hot-water supplying hole 1023 join on the first channel 1011, i.e. placed between the corresponding position and the first discharging hole 1031. Similarly, the second detergent supplier 1042 is placed at a downstream position from a position where the channel for supplying cold water from the second cold-water supplying hole 1022 and the channel for supplying hot water from the second hot-water supplying hole 1024 join on the second channel 1012, i.e. placed between the corresponding position and the second discharging hole 1032.

In the washing machine with this structure, the detergent or the softener is supplied by the first detergent supplier 1041 or the second detergent supplier 1042 after cold water or hot water is supplied to the water supplying unit 1000. Thus, the detergent or the softener is discharged to the washing tub as mixed with water, thereby minimizing the residues of the detergent or the softener in the water supplying unit 1000.

## Claims

1. A washing machine comprising:
a plurality of washing tubs (120, 130, 231, 241) loadable with laundry and configured to do the laundry;
a container (300) configured to store detergent;
a channel housing (330) provided between the container and the plurality of washing tubs and formed with channels (410, 411, 412) to supply the detergent from the container to the plurality of washing tubs;
at least one pump (270, 340) configured to perform a pumping operation to move the detergent in the channel; and
a controller (210) configured to control the at least one pump to supply the detergent to one selected among the plurality of washing tubs,
wherein the channel housing comprises a plurality of channel housing dischargers (430, 440, 500, 600) configured to respectively discharge the detergent moving in the channels to the plurality of washing tubs and a detergent channel (410) extended from the container and branching off (411, 412, 511, 521) respectively corresponding to the plurality of washing tubs, and
**characterized in that** each channel branched (411, 412, 511, 521) from the detergent channel communicates with the plurality of channel housing dischargers.

2. The washing machine according to claim 1, wherein the washing machine further comprises a water supplying unit (350, 800, 900, 1000) configured to supply water to the plurality of washing tubs, and coupled to the plurality of channel housing dischargers so that the detergent discharged from the plurality of channel housing dischargers can be mixed with the supplied water.

3. The washing machine according to claim 1, wherein:
the container comprises a first container (310) configured to store the detergent, and a second container (320) configured to store the softener;
the channel housing further comprises a softener channel (420) extended from the second container and branching off (421, 422) respectively corresponding to the plurality of washing tubs; and
each channel branched (421, 422) from the softener channel (420) communicates with the plurality of channel housing dischargers with which each channel branched from the detergent channel communicates.

4. The washing machine according to claim 3, wherein the channel housing discharger (500, 600) comprises a discharging pipe (610) coupled to the water supplying unit, and
the discharging pipe comprises a first pipe (510, 611) communicating with one of the detergent channel and the softener channel, and a second pipe (520, 612) surrounding an outer circumference of the first pipe so as to be isolated from the first pipe and communicating with the other one of the detergent channel and the softener channel.

5. The washing machine according to claim 4, wherein the channel housing discharger (600) comprises:
a valve (650) provided in an outlet of at least one of the first pipe (611) or the second pipe (612) in the discharging pipe (610); and
a spring (660) configured to bias the valve to selectively close or open the outlet based on the pumping operation of the pump.

6. The washing machine according to claim 1, wherein the detergent channel comprises a first detergent channel (411) through which detergent moves to be supplied to a first washing tub among the plurality of washing tubs, and a second detergent channel (412) through which detergent moves to be supplied to a second washing tub among the plurality of washing tubs, and
the controller controls the at least one pump to move the detergent through one selected between the first detergent channel and the second detergent channel based on a washing process.

7. The washing machine according to claim 1, wherein the channel housing comprises:
at least one backflow detergent discharging hole (450, 730) formed to penetrate the channel housing from an upper plate (750) of the channel housing so as to discharge the detergent, which flows back toward the upper plate of the channel housing, to the plurality of washing tubs; and
a rib (700) standing on the upper plate and surrounding a certain area of the upper plate including the at least one backflow detergent discharging hole.

8. The washing machine according to claim 2, wherein the water supplying unit (800, 900, 1000) comprises:
a water-supplying-unit housing (810, 910, 1010) formed with a water-supply channel (811, 812, 911, 1011, 1012) through which water moves;
a discharging hole (831, 932, 1031, 1032) through which water moving in the water-supply channel is discharged to the washing tub; and
a detergent supplier (840, 940, 1041, 1042) provided on the water-supply channel and configured to supply the detergent discharged from the plurality of channel housing dischargers to the discharging hole as mixed with the water.

9. The washing machine according to claim 8, wherein the water-supply channel (811, 812, 911, 1011, 1012) is extended from a first position, at which cold water is supplied to the water-supplying-unit housing, to the discharging hole (831, 932, 1031, 1032) via a second position at which hot water is supplied to the water-supplying-unit housing.

10. The washing machine according to claim 9, wherein
the detergent supplier (840, 940, 1041, 1042) is correspondingly provided between the second position of the water-supply channel and the discharging hole.

11. The washing machine according to claim 1, wherein the channel housing (330) is formed as a single body by injection molding.

## Patentansprüche

1. Waschmaschine, umfassend:
eine Vielzahl von Waschwannen (120, 130, 231, 241), die mit Wäsche beladbar und zum Waschen der Wäsche konfiguriert sind;
einen Behälter (300), der zum Aufbewahren von Waschmittel konfiguriert ist;
ein Kanalgehäuse (330), das zwischen dem Behälter und der Vielzahl von Waschwannen bereitgestellt und mit Kanälen (410, 411, 412) gebildet ist, um das Waschmittel aus dem Behälter der Vielzahl von Waschwannen zuzuführen;
mindestens eine Pumpe (270, 340), die dazu konfiguriert ist, einen Pumpvorgang durchzuführen, um das Waschmittel in dem Kanal zu bewegen; und
eine Steuerung (210), die dazu konfiguriert ist, die mindestens eine Pumpe zu steuern, um das Waschmittel einer aus der Vielzahl von Waschwannen ausgewählten zuzuführen,
wobei das Kanalgehäuse eine Vielzahl von Kanalgehäuse-Abgabevorrichtungen (430, 440, 500, 600), die dazu konfiguriert sind, das in den Kanälen bewegte Waschmittel jeweils in die Vielzahl von Waschwannen abzugeben, und einen Waschmittelkanal (410) umfasst, der von dem Behälter langgestreckt ist und davon abzweigt (411, 412, 511, 521), was jeweils der Vielzahl von Waschwannen entspricht, und
**dadurch gekennzeichnet, dass** jeder von dem Waschmittelkanal abgezweigte Kanal (411, 412, 511, 521) mit der Vielzahl von Kanalgehäuse-Abgabevorrichtungen kommuniziert.

2. Waschmaschine nach Anspruch 1, wobei die Waschmaschine ferner eine Wasserzufuhreinheit (350, 800, 900,1000) umfasst, die dazu konfiguriert ist, der Vielzahl von Waschwannen Wasser zuzuführen, und die an die Vielzahl von Kanalgehäuse-Abgabevorrichtungen gekoppelt ist, sodass das Waschmittel, das aus der Vielzahl von Kanalgehäuse-Abgabevorrichtungen abgegeben wird, mit dem zugeführten Wasser gemischt werden kann.

3. Waschmaschine nach Anspruch 1, wobei:
der Behälter einen ersten Behälter (310), der dazu konfiguriert ist, das Waschmittel aufzubewahren, und einen zweiten Behälter (320) umfasst, der dazu konfiguriert ist, den Weichspüler aufzubewahren;
das Kanalgehäuse ferner einen Weichspülerkanal (420) umfasst, der von dem zweiten Behälter langgestreckt ist und jeweils entsprechend der Vielzahl von Waschwannen abzweigt (421, 422); und
jeder von dem Weichspülerkanal (420) abgezweigte Kanal (421, 422) mit der Vielzahl von Kanalgehäuse-Abgabevorrichtungen kommuniziert, mit denen jeder von dem Waschmittelkanal abgezweigte Kanal kommuniziert.

4. Waschmaschine nach Anspruch 3, wobei die Kanalgehäuse-Abgabevorrichtung (500, 600) ein Abgaberohr (610) umfasst, das an die Wasserzufuhreinheit gekoppelt ist, und
das Abgaberohr ein erstes Rohr (510, 611), das mit einem von dem Waschmittelkanal und dem Weichspülerkanal kommuniziert, und ein zweites Rohr (520, 612) umfasst, das einen Außenumfang des ersten Rohrs umgibt, um von dem ersten Rohr isoliert zu sein, das mit dem anderen von dem Waschmittelkanal und dem Weichspülerkanal kommuniziert.

5. Waschmaschine nach Anspruch 4, wobei die Kanalgehäuse-Abgabevorrichtung (600) Folgendes umfasst:
ein Ventil (650), das in einem Auslass von mindestens einem von dem ersten Rohr (611) oder dem zweiten Rohr (612) in dem Abgaberohr (610) bereitgestellt ist; und
eine Feder (660), die dazu konfiguriert ist, das Ventil vorzuspannen, um den Auslass auf Grundlage des Pumpbetriebs der Pumpe selektiv zu schließen oder zu öffnen.

6. Waschmaschine nach Anspruch 1, wobei der Waschmittelkanal einen ersten Waschmittelkanal (411), durch den sich Waschmittel bewegt, um einer ersten Waschwanne aus der Vielzahl von Waschwannen zugeführt zu werden, und einen zweiten Waschmittelkanal (412) umfasst, durch den sich Waschmittel bewegt, um einer zweiten Waschwanne aus der Vielzahl von Waschwannen zugeführt zu werden, und
die Steuerung die mindestens eine Pumpe steuert, um das Waschmittel auf Grundlage eines Waschprozess durch einen ausgewählten Kanal zwischen dem ersten Waschmittelkanal und dem zweiten Waschmittelkanal zu bewegen.

7. Waschmaschine nach Anspruch 1, wobei das Kanalgehäuse Folgendes umfasst:
mindestens eine Rückfluss-Waschmittelabgabeöffnung (450, 730), die gebildet ist, um von einer oberen Platte (750) des Kanalgehäuses in das Kanalgehäuse einzudringen, um das Waschmittel,
das zu der oberen Platte des Kanalgehäuses zurückfließt, in die Vielzahl von Waschwannen abzugeben; und
eine Rippe (700), die auf der oberen Platte steht und einen gewissen Bereich der oberen Platte, einschließlich der mindestens einen Rückfluss-Waschmittelabgabeöffnung, umgibt.

8. Waschmaschine nach Anspruch 2, wobei die Wasserzufuhreinheit (800, 900, 1000) Folgendes umfasst:
ein Wasserzufuhreinheitengehäuse (810, 910, 1010), das mit einem Wasserzufuhrkanal (811, 812, 911, 1011, 1012) gebildet ist, durch den Wasser fließt;
eine Abgabeöffnung (831, 932, 1031, 1032), durch die Wasser, das sich in dem Wasserzufuhrkanal bewegt, an die Waschwanne abgegeben wird; und
eine Waschmittelzuführung (840, 940, 1041, 1042), die an dem Wasserzufuhrkanal bereitgestellt und dazu konfiguriert ist, das von der Vielzahl von Kanalgehäuse-Abgabevorrichtungen abgegebene Waschmittel der Abgabeöffnung gemischt mit dem Wasser zuzuführen.

9. Waschmaschine nach Anspruch 8, wobei der Wasserzufuhrkanal (811, 812, 911, 1011, 1012) von einer ersten Position, an der kaltes Wasser dem Wasserzufuhreinheitengehäuse zugeführt wird, über eine zweite Position, an der heißes Wasser dem Wasserzufuhreinheitengehäuse (831, 932, 1031, 1032) zugeführt wird, zu der Abgabeöffnung langgestreckt ist.

10. Waschmaschine nach Anspruch 9, wobei die Waschmittelzuführung (840, 940, 1041, 1042) entsprechend zwischen der zweiten Position des Wasserzufuhrkanals und der Abgabeöffnung bereitgestellt ist.

11. Waschmaschine nach Anspruch 1, wobei das Kanalgehäuse (330) durch Spritzgießen als einteiliger Körper gebildet ist.

## Revendications

1. Lave-linge comprenant :
une pluralité de cuves de lavage (120, 130, 231, 241) pouvant être chargées de linge et configurées pour faire la lessive ;
un contenant (300) configuré pour stocker un produit lessiviel ;
un boîtier de canal (330) prévu entre le contenant et la pluralité de cuves de lavage et formé de canaux (410, 411, 412) pour distribuer le produit lessiviel du contenant à la pluralité de cuves de lavage ;
au moins une pompe (270, 340) configurée pour effectuer une opération de pompage pour déplacer le produit lessiviel dans le canal ; et
un contrôleur (210) configuré pour commander à l'au moins une pompe de distribuer le produit lessiviel à l'une sélectionnée parmi la pluralité de cuves de lavage,
dans lequel le boîtier de canal comprend une pluralité d'évacuateurs de boîtier de canal (430, 440, 500, 600) configurés pour évacuer respectivement le produit lessiviel se déplaçant dans les canaux vers la pluralité de cuves de lavage et un canal de produit lessiviel (410) s'étendant à partir du contenant et se ramifiant (411, 412, 511, 521) respectivement en correspondance à la pluralité de cuves de lavage, et
**caractérisé en ce que**
chaque canal ramifié (411, 412, 511, 521) à partir du canal de produit lessiviel communique avec la pluralité d'évacuateurs de boîtier de canal.

2. Lave-linge selon la revendication 1, dans lequel le lave-linge comprend en outre une unité de distribution d'eau (350, 800, 900, 1000) configurée pour distribuer de l'eau à la pluralité de cuves de lavage, et couplée à la pluralité d'évacuateurs de boîtier de canal de sorte que le produit lessiviel évacué de la pluralité d'évacuateurs de boîtier de canal puisse être mélangé à l'eau distribuée.

3. Lave-linge selon la revendication 1, dans lequel :
le contenant comprend un premier contenant (310) configuré pour stocker le produit lessiviel, et un second contenant (320) configuré pour stocker l'assouplissant ;
le boîtier de canal comprend en outre un canal d'adoucissant (420) s'étendant à partir du second contenant et se ramifiant (421, 422) respectivement en correspondance à la pluralité de cuves de lavage ; et
chaque canal ramifié (421, 422) à partir du canal d'adoucissant (420) communique avec la pluralité d'évacuateurs de boîtier de canal avec lesquels communique chaque canal ramifié à partir du canal produit lessiviel.

4. Lave-linge selon la revendication 3, dans lequel l'évacuateur de boîtier de canal (500, 600) comprend un tuyau d'évacuation (610) couplé à l'unité de distribution d'eau, et
le tuyau d'évacuation comprend un premier tuyau (510, 611) communiquant avec l'un du canal de produit lessiviel ou du canal d'adoucissant, et un second tuyau (520, 612) entourant une circonférence externe du premier tuyau de manière à être isolé du premier tuyau et communiquant avec l'autre canal du canal de produit lessiviel et du canal d'adoucissant.

5. Lave-linge selon la revendication 4, dans lequel l'évacuateur de boîtier de canal (600) comprend :
une vanne (650) disposée dans une sortie d'au moins l'un du premier tuyau (611) ou du second tuyau (612) dans le tuyau d'évacuation (610) ; et
un ressort (660) configuré pour solliciter la vanne afin de fermer ou d'ouvrir sélectivement la sortie en fonction de l'opération de pompage de la pompe.

6. Lave-linge selon la revendication 1, dans lequel le canal de produit lessiviel comprend un premier canal de produit lessiviel (411) à travers lequel le produit lessiviel se déplace pour être distribué à une première cuve de lavage parmi la pluralité de cuves de lavage, et un second canal de produit lessiviel (412) à travers lequel le produit lessiviel se déplace pour être distribué à une deuxième cuve de lavage parmi la pluralité de cuves de lavage, et
le contrôleur commande à l'au moins une pompe de déplacer le produit lessiviel à travers l'un sélectionné entre le premier canal de produit lessiviel et le second canal de produit lessiviel sur la base d'un processus de lavage.

7. Lave-linge selon la revendication 1, dans lequel le boîtier de canal comprend :
au moins un trou d'évacuation de produit lessiviel de reflux (450, 730) formé pour pénétrer dans le boîtier de canal depuis une plaque supérieure (750) du boîtier de canal de manière à évacuer le produit lessiviel, qui reflue vers la plaque supérieure du boîtier de canal, vers la pluralité de cuves de lavage ; et
une nervure (700) située sur la plaque supérieure et entourant une certaine zone de la plaque supérieure comprenant l'au moins un trou d'évacuation de produit lessiviel de reflux.

8. Lave-linge selon la revendication 2, dans lequel l'unité de distribution d'eau (800, 900, 1000) comprend :
un boîtier d'unité de distribution d'eau (810, 910, 1010) formé d'un canal de distribution d'eau (811, 812, 911, 1011, 1012) à travers lequel l'eau se déplace ;
un trou d'évacuation (831, 932, 1031, 1032) à travers lequel l'eau se déplaçant dans le canal de distribution d'eau est évacuée vers la cuve de lavage ; et
un distributeur de produit lessiviel (840, 940, 1041, 1042) prévu sur le canal de distribution d'eau et configuré pour distribuer le produit lessiviel évacué de la pluralité d'évacuateurs de boîtier de canal vers le trou d'évacuation tandis qu'il est mélangé à l'eau.

9. Lave-linge selon la revendication 8, dans lequel le canal de distribution d'eau (811, 812, 911, 1011, 1012) s'étend depuis une première position, dans laquelle de l'eau froide est distribuée au boîtier de l'unité de distribution d'eau, jusqu'au trou d'évacuation (831, 932, 1031, 1032) via une seconde position à laquelle de l'eau chaude est distribuée au boîtier de l'unité de distribution d'eau.

10. Lave-linge selon la revendication 9, dans lequel
le distributeur de produit lessiviel (840, 940, 1041, 1042) est disposé de manière correspondante entre la seconde position du canal de distribution d'eau et le trou d'évacuation.

11. Lave-linge selon la revendication 1, dans lequel le boîtier de canal (330) est formé sous la forme d'un corps unique par moulage par injection.
